# EUROPÄISCHE PATENTSCHRIFT

(11) **EP 3 932 270 B1**
(45) Veröffentlichungstag und Bekanntmachung des Hinweises auf die Patenterteilung: **10.05.2023**
(21) Anmeldenummer: 21172484.4
(22) Anmeldetag: 06.05.2021
(51) Int. Cl.: A47J 31/52, A47J 31/54, A47J 31/56

(54) **HYDRAULISCHES SYSTEM, HEISSGETRÄNKEAUTOMAT, VERFAHREN ZUR HERSTELLUNG EINES HYDRAULISCHEN SYSTEMS UND VERFAHREN ZUM AUSGEBEN EINES HEISSGETRÄNKS**
HYDRAULIC SYSTEM, HOT BEVERAGE DISPENSER, METHOD OF MANUFACTURING A HYDRAULIC SYSTEM AND METHOD OF DISPENSING HOT BEVERAGE
SYSTÈME HYDRAULIQUE, DISTRIBUTEUR AUTOMATIQUE DE BOISSONS CHAUDES, PROCÉDÉ DE FABRICATION D'UN SYSTÈME HYDRAULIQUE ET PROCÉDÉ DE DISTRIBUTION D'UNE BOISSON CHAUDE

(30) Priorität: 30.06.2020 DE 102020208126
(43) Veröffentlichungstag der Anmeldung: 05.01.2022
(73) Patentinhaber: Sielaff GmbH & Co. KG Automatenbau Herrieden, 91567 Herrrieden (DE)
(72) Erfinder: SCHEIDERER, Stefan, 91578 Leutershausen (DE); SCHÖNLEBEN, Günther, 91622 Rügland (DE)
(74) Vertreter: Isarpatent

(56) Entgegenhaltungen:
- US-A1- 2009 308 255
- US-A1- 2017 273 502
- US-A1- 2020 054 165
- US-B2- 10 307 013

## Beschreibung

### GEBIET DER ERFINDUNG

Die vorliegende Erfindung betrifft ein hydraulisches System für einen Heißgetränkeautomaten, ein Verfahren zur Herstellung eines derartigen hydraulischen Systems, einen Heißgetränkeautomaten mit einem derartigen hydraulischen System sowie ein Verfahren zum Ausgeben eines Heißgetränks, insbesondere mit einem derartigen Heißgetränkeautomaten.

### TECHNISCHER HINTERGRUND

Heißgetränkeautomaten sind beispielsweise als Verkaufsautomaten in öffentlichen Einrichtungen, Kantinen oder in Aufenthaltsräumen von Unternehmen zu finden. Oftmals werden damit verschiedene Heißgetränke wie Kaffee, Espresso oder Tee angeboten und vor Ort zubereitet und ausgegeben. Dabei ist es vorteilhaft, Wasser auf eine für das ausgewählte Getränk optimale Temperatur zu erhitzen, bevor das Wasser zur Zubereitung des Heißgetränks entsprechend ausgegeben wird, beispielsweise in eine Brüheinheit.

Die optimale Temperatur kann je nach gewähltem Getränk unterschiedlich sein. Daher wird das Wasser oftmals zweistufig erhitzt. Beispielsweise beschreibt die WO 2019/021256 A1 einen zweistufigen Wassererhitzer, in welchem Wasser zunächst in einem Boiler auf 75°C erhitzt wird, bevor es zur Ausgabe auf eine für das Getränk optimale Temperatur zwischen 75°C und 100°C mittels eines innerhalb des Boilers angeordneten zweiten Erhitzers gebracht wird, sodass das Wasser den Boiler mit der optimalen Temperatur verlässt.

US 2020/054165 A1 beschreibt eine Kaffeemaschine mit einem Heizsystem, welches ein Wassermodul mit einem Boiler und ein Brühmodul zum Brühen von Kaffee mit einem Durchlauferhitzer umfasst. In einer Ablaufleitung ist ein weiterer Durchlauferhitzer zum Erhitzen von Wasser zur Bereitstellung von Bypass-Wasser oder zur Zubereitung von Tee oder anderen Aufgussgetränken vorgesehen.

US 10307013 B2 beschreibt eine Profi-Kaffeemaschine, welche einen mit einem Boiler wechselwirkenden Wärmetauscher und einen Durchflusserhitzer umfasst. Wasser zur Zubereitung von Kaffee wird zunächst durch den Wärmetauscher und anschließend durch den Durchlauferhitzer erhitzt, wobei die Leistung des Durchlauferhitzers für eine optimale Brühtemperatur angepasst werden kann. Mit einem weiteren mit demselben Boiler wechselwirkenden Wärmetauscher wird Wasser zur Zubereitung von Tee erhitzt.

US 2009/308255 A1 beschreibt eine Kaffeemaschine mit einem als Boiler ausgebildeten Wärmetauscher und einer Ausgabevorrichtung. Wasser zur Zubereitung von Kaffee wird zunächst durch den Wärmetauscher vorerhitzt, bevor das Wasser in einem als Mini-Boiler ausgebildeten und innerhalb der Ausgabevorrichtung angeordneten Heizkammer mit einem Heizwiderstand auf eine für die Zubereitung des Getränks optimale Temperatur weiter erhitzt wird.

### ZUSAMMENFASSUNG DER ERFINDUNG

Vor diesem Hintergrund liegt der vorliegenden Erfindung die Aufgabe zugrunde, ein verbessertes hydraulisches System für einen Heißgetränkeautomaten anzugeben.

Erfindungsgemäß wird diese Aufgabe durch ein hydraulisches System mit den Merkmalen des Patentanspruchs 1, einen Heißgetränkeautomaten mit den Merkmalen des Anspruchs 9, ein Verfahren mit den Merkmalen des Patentanspruches 12 und/oder durch ein Verfahren mit den Merkmalen des Patentanspruches 13 gelöst.

Die der vorliegenden Erfindung zugrunde liegende Idee besteht darin, ein hydraulisches System modular aus Standardkomponenten aufzubauen, wobei neben einem Boiler als erste Heizstufe ein variabel ansteuerbarer Durchlauferhitzer als zweite Heizstufe räumlich getrennt angeordnet ist. Der Durchlauferhitzer bezieht dabei vorgeheiztes Warmwasser aus einem inneren Tank eines Boilers zum kontrollierten Aufheizen für die Zubereitung verschiedener Heißgetränke, wobei das Aufheizen durch die Steuereinrichtung variabel an das herzustellende Heißgetränk angepasst wird. Auf diese Weise kann der Durchlauferhitzer einerseits flexibel innerhalb des hydraulischen Systems angeordnet werden. Insbesondere ist der Durchlauferhitzer in seiner Ausgestaltung nicht durch die räumlichen Gegebenheiten des Boilers oder eines Brühers beschränkt. Durch das räumlich separate Anordnen sind der Boiler und der Durchlauferhitzer zudem jeweils leicht zugänglich und können somit einfach gewartet und im Fall eines Defekts ggfs. leicht einzeln repariert oder ausgetauscht werden.

Der erfindungsgemäße zweistufige Erhitzer mit getrennt angeordneten Heizstufen innerhalb eines gemeinsamen hydraulischen Systems jedoch außerhalb einer Getränkezubereitungseinheit hat große Vorteile in Bezug auf den möglichen Einsatz leicht verfügbarer Komponenten. So sind aufgrund der kaum vorhandenen räumlichen Beschränkungen kostengünstige Standardkomponenten nutzbar, welche leicht zugänglich platzierbar und besonders leicht austauschbar sind. Auch ist es auf einfache Weise möglich, zusätzliche dritte oder weitere Heizstufen, beispielsweise in Form eines weiteren Boilers und/oder eines weiteren Durchlauferhitzers, in das hydraulische System zu integrieren. Auf diese Weise kann die Leistungsaufnahme kaskadiert werden, sodass auch bei vergleichsweise geringer Leistungsaufnahme bzw. geringer verfügbarer Leistung eines elektrischen Anschlusses schnelle Reaktionszeiten des hydraulischen Systems auf eine Anforderung eines Heißgetränks ermöglicht sind.

Die erfindungsgemäße Funktionalität wird in Zusammenspiel der hydraulischen Komponenten mit der Steuereinrichtung erzielt. Die Steuereinrichtung kann jegliche für die Anforderung geeignete Form haben, wie beispielsweise als programmierbarer Mikrochip, als PC, als Cloudanwendung oder dergleichen. Die Steuereinrichtung ist in der Lage und dazu ausgelegt, die Heizleistung des Durchlauferhitzers je nach herzustellendem Heißgetränk variabel zu regulieren, was beispielsweise über eine Relaisschaltung erfolgen kann. Auch kann die Steuereinrichtung dazu ausgebildet sein, die Netzspannung bei der Regulierung mit zu berücksichtigen. So kann beispielsweise eine Phasenanschnittsteuerung oder eine Phasenpaketsteuerung zur stufenlosen Regulierung des Durchlauferhitzers genutzt werden.

Der Heißgetränkeautomat mit dem entsprechenden hydraulischen System ist in der Lage, Wasser auf eine für ein ausgewähltes Heißgetränk jeweils geeignete Zubereitungstemperatur zu erhitzen und das gewählte Heißgetränk somit in hoher Qualität zuzubereiten. Die Heißgetränke umfassen dabei zumindest Tee und Kaffee, welche in der Regel unterschiedliche Zubereitungstemperaturen benötigen. Selbstverständlich können auch noch weitere Heißgetränke umfasst sein. So ist das Heißwasser zur Zubereitung von Tee und Kaffee und gegebenenfalls von weiteren Heißgetränken durch das erfindungsgemäße hydraulische System mit demselben Boiler und demselben Durchlauferhitzer erhitzbar. Auf diese Weise kann das Heißwasser bei der Zubereitung von Tee auf eine vorbestimmte erste Zubereitungstemperatur erhitzt werden, welche typischerweise im Bereich von 85°C bis 100°C liegt. Die erste Zubereitungstemperatur kann auch für bestimmte Teesorten davon abweichen. Bei der Zubereitung von Kaffee oder kaffeeähnlichen Heißgetränken kann die Steuereinrichtung den Durchlauferhitzer hingegen zum Erhitzen des Heißwassers auf eine vorbestimmte zweite Zubereitungstemperatur ansteuern, welche typischerweise im Bereich von 90°C bis 96°C liegt. Die zweite Zubereitungstemperatur kann auch für bestimmte Kaffeesorten davon abweichen. Das so auf eine angepasste Temperatur erhitzte Heißwasser wird anschließend in einen Brüher bzw. eine Brühgruppe zur Zubereitung des Kaffees ausgegeben.

Gemäß einer Weiterbildung erlaubt die variable Ansteuerung es überdies, die Zubereitungstemperatur während der Getränkeausgabe zu variieren, so dass auch Temperaturprofile mit sich zeitlich ändernden Zubereitungstemperaturen für die Zubereitung der verschiedenen Heißgetränke angewendet werden können. Die Temperaturprofile können je nach herzustellendem Kaffeeprodukt (Espresso, Lungo, Milchkaffee, etc.) beispielsweise einen abfallenden oder ansteigenden Temperaturverlauf aufweisen. Auf diese Weise kann der Geschmack des Heißgetränks verbessert und damit das Benutzererlebnis gesteigert werden.

Unter einem Boiler ist vorliegend ein Wassererhitzer mit einem internen Tank zu verstehen, in dem Wasser auf eine vorbestimmte Boilerwassertemperatur erhitzt werden kann. Die Boilerwassertemperatur ist dabei vielfältig auf einen vorbestimmten Wert, in der Regel zwischen ca. 60 °C und 90 °C, wählbar. Mit Warmwasser wird das von dem Boiler auf die vorbestimmte Boilerwassertemperatur erhitzte Wasser bezeichnet, welches sich in dem internen Tank und in der Zuleitung zum Durchlauferhitzer befindet. Der Kaltwassereinlauf des Boilers speist den Tank mit nachlaufendem Kaltwasser, wenn Warmwasser aus dem Tank entnommen wird.

Der Begriff Boiler umfasst dabei jegliche Art von Boiler, beispielsweise auch einen Druckboiler, in dem Wasser unter einem vorbestimmten Druck, beispielsweise 10 bar oder 15 bar, steht. Ein erhöhter Wasserdruck kann dabei durch eine Pumpe, beispielsweise einer Flügelzellenpumpe oder Schwingkolbenpumpe, erzeugt werden. Unter Druck ist das Wasser in diesem Fall auch auf eine Temperatur von über 100 °C erhitzbar, ohne dass das Wasser in die Gasphase bzw. Dampfphase übergeht. Ein Boiler umfasst für gewöhnlich neben einem Heizelement, was beispielsweise eine Heizwendel, ein Heizstab oder ein anders gebildeter Heizwiderstand sein kann, auch einen Temperatursensor, welcher die Temperatur des im internen Tank befindlichen Wassers erfasst. Eine Regelungseinrichtung regelt die Temperatur des Wassers im internen Tank des Boilers auf die in Ihrem Wert einstellbare vorbestimmte Boilerwassertemperatur.

Ein Durchlauferhitzer bezeichnet hier einen Wassererhitzer, welcher dazu ausgelegt und vorgesehen ist, das Wasser im Durchfluss zu erhitzen. Der Durchlauferhitzer ist insbesondere im Sinne einer Standardkomponente zu verstehen, welche von unterschiedlichen Anbietern in verschiedenartigen Ausgestaltungen bezogen werden kann und mit Standardkupplungen leicht in das hydraulische System integrierbar ist. Der Durchlauferhitzer kann dabei ein Heizelement oder mehrere, ggfs. auch unterschiedliche Heizelemente aufweisen. Das Heizelement oder die Heizelemente sind durch die Steuereinrichtung in der oben beschriebenen Weise ansteuerbar.

In einem Heißgetränkeautomaten sind der Boiler und der Durchlauferhitzer grundsätzlich im Inneren, i.d.R. innerhalb eines Gehäuses des Heißgetränkeautomaten angeordnet vorgesehen, so dass diese Komponenten für einen Benutzer des Heißgetränkeautomaten nicht zugänglich sind. Der Durchlauferhitzer ist vorzugsweise in der Nähe des Boilers angeordnet, so dass nur kurze Zuleitungswege notwendig sind. Von einer Getränkeausgabe sind der Boiler und der Durchlauferhitzer vorzugsweise beabstandet. Zwischen dem hydraulischen System und der Getränkeausgabe sind Zubereitungseinheiten, beispielsweise ein Brüher, ein Mischer und/oder ein Aufschäumer, vorgesehen. Die Zubereitungseinheiten sind somit im Nachlauf des hydraulischen Systems angeordnet und geschaltet. In die Kopplung des hydraulischen Systems mit der Getränkeausgabe kann somit bedarfsgerecht angepasst an das herzustellende Heißgetränk die jeweilige Zubereitungseinheit zwischengeschaltet werden, wozu insbesondere entsprechende Ventile vorgesehen sind.

Mit Heißwasser wird das aus dem Durchlauferhitzer auslaufende Wasser bezeichnet, nachdem es durch den Durchlauferhitzer gelaufen ist. Im Falle der Aktivierung des Durchlauferhitzers durch die Steuereinrichtung ist die Temperatur des austretenden Heißwassers damit höher als die Temperatur des in den Durchlauferhitzer eintretenden Warmwassers. Jedoch kann, sofern die vorbestimmte Zubereitungstemperatur gleich der vorbestimmten Boilerwassertemperatur ist, die Steuereinrichtung den Durchlauferhitzer auch nicht aktivieren, sodass die Temperatur des Heißwassers in diesem Fall auch gleich oder geringfügig geringer als die Temperatur des Warmwassers im Boiler sein kann.

Der Wasseranschluss bezeichnet hier einen herkömmlichen hydraulischen Anschluss, welcher in Verbindung zu einer Wasserversorgung steht und das hydraulische System mit ausreichend Wasser versorgen kann. Sowohl der Wasseranschluss, als auch der Kaltwassereinlauf und der Warmwasserauslauf des Boilers sowie der Warmwassereinlauf und der Heißwasserauslauf des Durchlauferhitzers weisen hydraulische Verbindungsmittel auf, welche durch herkömmliche Rohrsysteme anschließbar sind. Dabei kann das Rohrsystem zur Verbindung zwischen den Anschlüssen auf unterschiedliche Rohrdurchmesser, wie beispielsweise DN 2 mm, DN 4 mm, DN 6 mm, DN 8 mm, 1/8 Zoll oder 1/4 Zoll ausgelegt sein. Auch können mehrere verschiedene Rohrgrößen abschnittsweise kombiniert werden. Grundsätzlich kann eine Verbindung eine hydraulische und/oder eine elektrische Verbindung bezeichnen, je nachdem, welche Komponenten miteinander verbunden werden. Grundsätzlich kann jede Art von Verbindung gewählt werden, welche die für die entsprechende Aufgabe notwendige Funktion erfüllt.

Der Heißgetränkeautomat kann weitere Funktionseinheiten aufweisen. Insbesondere kann zwischen dem hydraulischen System und der Getränkeausgabe eine oder mehrere Zubereitungseinrichtungen, beispielsweise ein Brüher bzw. eine Brühgruppe, eine Mischer, ein Aufschäumer oder dergleichen zwischengeschaltet oder zuschaltbar vorgesehen sein. Insbesondere ist das Hydrauliksystem ein von derartigen Zubereitungseinrichtungen separates System. Die Zubereitungseinrichtungen können beispielsweise bedarfsgerecht über ein Schaltventil hydraulisch zwischen das hydraulische System und die Getränkeausgabe geschaltet werden. So ist unter der Kopplung des hydraulischen Systems mit der Getränkeausgabe des Heißgetränkeautomaten zu verstehen, dass von dem hydraulischen System erhitztes Heißwasser unter möglichem Durchlaufen einer der solchen Zubereitungseinrichtung letztlich zur Getränkeausgabe des Heißgetränkeautomaten gelangen kann.

Vorteilhafte Ausgestaltungen und Weiterbildungen ergeben sich aus den weiteren Unteransprüchen sowie aus der Beschreibung unter Bezugnahme auf die Figuren der Zeichnung.

Gemäß einer Ausführungsform ist ein Flussmesser zum Erfassen eines Durchflusses vorgesehen. Bei dem Flussmesser kann es sich um jegliche Form von geeignetem Flussmesser oder Sensor handeln, beispielsweise ein Wasservolumenstrommesser/-sensor, Strömungsgeschwindigkeitsmesser, Massendurchflussmesser oder dergleichen. Bei dem Durchfluss handelt es sich entsprechend um die Ist-Größe des verwendeten Durchflussmessers und kann beispielsweise ein Wasservolumenstrom oder ein Wassermassestrom sein. In diesem System entspricht die eingeführte Wassermenge, das heißt die Wassermasse bzw. das Wassergewicht des eingeführten Wassers, auch der ausgegebenen Wassermenge. Auf diese Weise kann leicht kontrolliert werden, wie viel Wasser verbraucht wird. Der Flussmesser ist dabei mit der Steuereinrichtung verbunden. Auf diese Weise kann der Durchfluss als Eingangsparameter für die Steuerung des Durchlauferhitzers genutzt werden. Die Steuereinrichtung ist dazu ausgelegt, den Durchlauferhitzer zum Regulieren der Temperatur des Heißwassers basierend auf dem erfassten Durchfluss anzusteuern. Auf diese Weise kann die Temperatur des Heißwassers genauer reguliert werden, so dass die für das ausgewählte Getränk optimale Temperatur mit geringeren Abweichungstoleranzen erreicht wird.

Gemäß einer Ausführungsform ist der Flussmesser zwischen dem Wasseranschluss und dem Kaltwassereinlauf des Boilers angeordnet bzw. angeschlossen. Auf diese Weise kann ein gewöhnlicher Flussmesser verwendet werden, und braucht insbesondere nicht für hohe Temperaturen geeignet sein. Damit werden die Anforderungen an den Flussmesser reduziert. Alternativ kann der Flussmesser aber auch im Warm- oder Heißwasserbereich, d.h. dem Boiler oder dem Durchlauferhitzer nachgelagert, angeordnet bzw. angeschlossen sein.

Gemäß einer Ausführungsform ist ein Warmwassertemperatursensor zum Erfassen einer Warmwassertemperatur zwischen dem Boiler und dem Durchlauferhitzer vorgesehen. Unter der Warmwassertemperatur zwischen dem Boiler und dem Durchlauferhitzer ist dabei die Wassertemperatur zu verstehen, welche beispielsweise in einer Verbindungsleitung zwischen dem Boiler und dem Durchlauferhitzer erfasst werden kann. Mit dem Warmwassertemperatursensor kann somit eine sich möglicherweise verändernde Temperatur des aus dem Boiler austretenden Warmwassers erfasst werden. Je nach Anordnung des Warmwassertemperatursensors kann die Temperatur des Warmwassers unmittelbar nach dem Warmwasserauslauf des Boilers, mittig zwischen Boiler und Durchlauferhitzer, oder bevorzugt unmittelbar vor dem Warmwassereinlauf des Durchlauferhitzers erfasst werden. Auf diese Weise kann beispielsweise eine Veränderung der Temperatur des aus dem Boiler ablaufenden Warmwassers ermittelt werden, welche durch eine Vermischung des in den Boiler nachlaufenden Kaltwassers mit dem in dem Tank bevorrateten Warmwasser verursacht wird. Ferner kann beispielsweise auch ein etwaiger Temperaturabfall zwischen dem Boiler und dem Durchlauferhitzer, welcher beispielsweise bei geringem Durchfluss durch Wärmeabgabe an das Verbindungsrohr verursacht ist, erfasst werden. Selbstverständlich kann auch eine Toleranz bei der Bereitstellung des Warmwassers mit der vorbestimmten Boilerwassertemperatur im inneren Tank des Boilers entsprechend erfasst werden.

Der Warmwassertemperatursensor ist mit der Steuereinrichtung signalübertragend verbunden, so dass der Temperaturabfall ebenfalls als Eingangsparameter für die Steuerung des Durchlauferhitzers genutzt werden kann. Die Steuereinrichtung ist dazu ausgelegt, den Durchlauferhitzer zum Regulieren der Temperatur des Heißwassers basierend auf der Warmwassertemperatur, insbesondere basierend auf einer Differenz zwischen der vorbestimmten Zubereitungstemperatur und der ermittelten Warmwassertemperatur, und/oder basierend auf dem Durchfluss anzusteuern. So kann der Temperaturabfall des Warmwassers durch die Vermischung mit dem nachfließenden Kaltwasser und/oder zwischen dem Boiler und dem Durchlauferhitzer entsprechend berücksichtigt werden, und somit eine Heizleistung des Durchlauferhitzers entsprechend zum Erreichend der vorbestimmten Zubereitungstemperatur angepasst werden.

Gemäß einer Ausführungsform ist die vorbestimmte Zubereitungstemperatur auf mindestens drei vorbestimmte Werte einstellbar. Insbesondere sind die drei vorbestimmten Werte unterschiedlich. Selbstverständlich ist das hydraulische System bei Bedarf auch auf mehr als drei vorbestimmte Zubereitungstemperaturen erweiterbar.

Gemäß einer Ausführungsform weist der Durchlauferhitzer zumindest eine erste Heizstufe und eine zweite Heizstufe auf. Die Heizstufen sind dabei für gewöhnlich durch zwei voneinander getrennte Heizelemente realisiert. Das erlaubt eine differenzierte Regulierung der Temperatur im Durchlauferhitzer. Außerdem erlaubt es die Verwendung von baulich kleineren Heizelementen. So ist eine erste maximale elektrische Leistungsaufnahme der ersten Heizstufe bevorzugt kleiner als eine zweite maximale elektrische Leistungsaufnahme der zweiten Heizstufe vorgesehen. Die erste maximale elektrische Leistungsaufnahme und die zweite elektrische Leistungsaufnahme können jedoch auch gleich vorgesehen sein. Alternativ können statt eines Durchlauferhitzers mit zumindest zwei Heizstufen auch zumindest zwei hintereinander oder in Reihe angeschlossener Durchlauferhitzer mit jeweils einer Heizstufe verwendet werden. Dadurch kann auf einfache Weise eine Leistungsentnahme aus dem Stromnetz flexibler gestaltet werden, was beispielsweise zum Verhindern eines Flickers genutzt werden kann.

Gemäß einer Ausführungsform liegt die erste maximale elektrische Leistungsaufnahme der ersten Heizstufe in einem Bereich von 100 W bis 1000 W, insbesondere von 400 W bis 600 W. Dabei ist eine maximale elektrische Leistungsaufnahme von 500 W der ersten Heizstufe besonders bevorzugt. Die zweite maximale elektrische Leistungsaufnahme der zweiten Heizstufe liegt im Bereich von 1000 W bis 2000 W, insbesondere von 1200 W bis 1400 W. Dabei ist eine maximale elektrische Leistungsaufnahme von 1500 W der zweiten Heizstufe besonders bevorzugt. Eine maximale elektrische Gesamtleistungsaufnahme des Durchlauferhitzers liegt im Bereich von 1500 W bis 2500 W, insbesondere von 1500 W bis 2000 W. Somit kann der Durchlauferhitzer aus einem 230 V Stromnetz bzw. aus einer gewöhnlichen Haushaltssteckdose versorgt werden.

Erfindungsgemäß ist die Steuereinrichtung zur Aktivierung des Durchlauferhitzers und/oder Deaktivierung des Durchlauferhitzers bei einem Nulldurchgang einer sinusförmigen Versorgungsspannung ausgelegt. Auf diese Weise kann ein Auftreten eines Flickers in der Netzspannung minimiert werden. Insbesondere ist die Steuereinrichtung zur Aktivierung der ersten Heizstufe des Durchlauferhitzers und/oder der zweiten Heizstufe des Durchlauferhitzers ausgelegt. Dadurch kann das Auftreten eines Flickers in der Netzspannung weiter minimiert werden. Zusätzlich kann mit einer Phasenanschnittsteuerung und/oder Phasenpaketsteuerung die Leistungsaufnahme noch in kleinere Stufen unterteilt werden, wobei die dem Durchlauferhitzer bereitgestellte elektrische Leistung nach jeder Sinusspannung der Netzspannung stufenweise, beispielsweise in 100 W, 200 W oder 300 W-Schritten, erhöht wird.

Gemäß einer Ausführungsform ist der Boiler als Druckboiler ausgebildet. Auf diese Weise kann die den erhöhten Wasserdruck bereitstellende Pumpe dem Boiler vorgelagert werden, und so die Pumpe im Kaltwasserbereich angeordnet werden. Der Druckboiler und in dessen Nachlauf angeordnete hydraulische Elemente sind für einen Wasserdruck zwischen 2 bar und 20 bar, insbesondere zwischen 8 bar und 12 bar, bevorzugt etwa 10 bar, ausgelegt. Bei der Ausgabe von Heißwasser erzeugt der Ventilquerschnitt des Ausgabeventils den Gegendruck. Der Gegendruck oder Systemdruck wird durch die im hydraulischen System vorhandenen hydraulischen Widerstände aller Bauteile und nachgelagerter Komponenten wie beispielsweise Brüheinheiten etc. erzeugt. Folglich sind neben dem Durchlauferhitzer auch insbesondere die Verbindungen zwischen dem Druckboiler, dem Durchlauferhitzer und den Ausgabeventilen auf einen entsprechenden Wasserdruck ausgelegt.

Gemäß einer Ausführungsform ist ein dem Durchlauferhitzer nachgelagerter Heißwassertemperatursensor zur Erfassung einer Heißwassertemperatur vorgesehen. Unter der Heißwassertemperatur ist die Temperatur des aus dem Durchlauferhitzer auslaufenden Heißwassers zu verstehen. Damit wird die Temperaturüberwachung im hydraulischen System weiter verbessert. Der Heißwassertemperatursensor ist mit der Steuereinrichtung verbunden. Auf diese Weise kann mit der erfassten Heißwassertemperatur ein zusätzlicher Parameter für die Steuerung des Durchlauferhitzers bereitgestellt werden. Die Steuereinrichtung ist in dieser Ausführungsform als Regelungseinrichtung zum Ansteuern des Durchlauferhitzers basierend auf der Differenz zwischen der vorbestimmten Zubereitungstemperatur und der ermittelten Warmwassertemperatur und ergänzend basierend auf der Differenz zwischen der Heißwassertemperatur und der Zubereitungstemperatur ausgelegt. Durch diese Regelung wird eine etwaige Differenz zwischen der vorbestimmten Zubereitungstemperatur und der ermittelten Heißwassertemperatur reduziert, so dass die tatsächliche Heißwassertemperatur für das ausgewählte Heißgetränk jeweils mit minimierter Toleranz bereitgestellt wird.

Gemäß einer Ausführungsform des Heißgetränkeautomaten ist das hydraulische System mit der Getränkeausgabe zur Zubereitung aller verschiedener durch die Getränkeausgabe ausgebbarer Heißgetränke mit dem aus dem Durchlauferhitzer auslaufenden Heißwasser gekoppelt. Somit können vorteilhaft alle durch den Heißgetränkeautomaten herstellbaren Heißgetränke mit dem durch das erfindungsgemäße hydraulische System bereitgestellte Heißwasser zubereitet und durch die Getränkeausgabe ausgegeben werden. So sind keine parallelen hydraulisches Systeme und auch keine dem Durchlauferhitzer vorgelagerte hydraulische Verzweigung mit separatem Durchlauferhitzer notwendig. Insbesondere sind keine gesonderten hydraulischen Systeme oder Teilsysteme speziell für die Zubereitung von Tee oder Kaffee, oder anderen Heißgetränken, wie z.B. Kakao, Instantgetränken, Mischgetränken usw. notwendig.

Gemäß einer Ausführungsform des Heißgetränkeautomaten ist eine Eingabeeinrichtung zur Auswahl eines auszugebenden Heißgetränks durch einen Nutzer vorgesehen. Bei der Eingabeeinrichtung kann es sich um unterschiedliche bei Heißgetränkeautomaten übliche Eingabeeinrichtungen, wie Knöpfe, Tastatur, Touchscreen, Spracheingabe oder dergleichen handeln. Denkbar wäre aber auch eine Ferneingabe, beispielweise per Fernsteuerung oder per Smartphone, die mit einer geeigneten Kommunikationseinrichtung auf den Heißgetränkeautomaten übertragen wird. Auf diese Weise kann ein Nutzer einfach aus einer Vielzahl von unterschiedlichen Heißgetränken wählen. Die Steuereinrichtung ist zum Regulieren der Temperatur des Heißwassers angepasst an eine jeweilige optimale Zubereitungstemperatur eines mittels der Eingabeeinrichtung ausgewählten Heißgetränks ausgelegt, welche insbesondere für Tee, Kaffee, Espresso, Instantgetränke, Kakaogetränke und/oder Mischgetränke sowie entsprechenden Sorten und Geschmacksrichtungen jeweils individuell einstellbar ist. Die Steuereinrichtung reguliert somit im Betrieb entsprechend die Zubereitungstemperatur angepasst an eine für das an der Eingabeeinrichtung ausgewählte Heißgetränk optimale Temperatur. Die optimale Temperatur umfasst dabei nicht nur eine bei Beginn der Ausgabe für die Zubereitung des Heißgetränks optimale Zubereitungstemperatur, sondern darüber hinaus auch Temperaturprofile, wonach sich die Zubereitungstemperatur während der Ausgabe des Heißgetränks dynamisch ändert. Auf diese Weise kann ein unter optimaler Temperatur bzw. Temperaturprofil zubereitetes Heißgetränk an den Nutzer des Heißgetränkeautomaten ausgegeben werden, was die Qualität und den Geschmack des Heißgetränks verbessert.

Die obigen Ausgestaltungen und Weiterbildungen lassen sich, sofern sinnvoll, beliebig miteinander kombinieren. Insbesondere sind sämtliche Merkmale des hydraulischen Systems auf das Verfahren zur Herstellung des hydraulischen Systems und/oder auf einen Heißgetränkeautomaten und/oder auf das Verfahren zum Ausgeben eines Heißgetränks übertragbar, und umgekehrt. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand der in den schematischen Figuren der Zeichnungen angegebenen Ausführungsbeispiele näher erläutert. Es zeigen dabei:
- Fig. 1: eine schematische Darstellung einer Ausführungsform eines hydraulischen Systems;
- Fig. 2: eine schematische Darstellung einer Ausführungsform eines Heißgetränkeautomaten;
- Fig. 3: eine schematische Darstellung einer weiteren Ausführungsform eines hydraulischen Systems;
- Fig. 4: eine schematische Darstellung einer noch weiteren Ausführungsform eines hydraulischen Systems;
- Fig. 5: eine schematische Darstellung einer noch weiteren Ausführungsform eines hydraulischen Systems;
- Fig. 6: eine schematische Darstellung einer noch weiteren Ausführungsform eines hydraulischen Systems;
- Fig. 7: eine schematische Darstellung einer Regelung eines hydraulischen Systems;
- Fig. 8: eine schematische Darstellung eines Verfahrens zur Herstellung eines hydraulischen Systems; und
- Fig. 9: eine schematische Darstellung eines Verfahrens zum Ausgeben eines Heißgetränks.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnungen sind gleiche, funktionsgleiche und gleich wirkende Elemente, Merkmale und Komponenten - sofern nichts Anderes ausführt ist -jeweils mit denselben Bezugszeichen versehen.

### BESCHREIBUNG VON AUSFÜHRUNGSBEISPIELEN

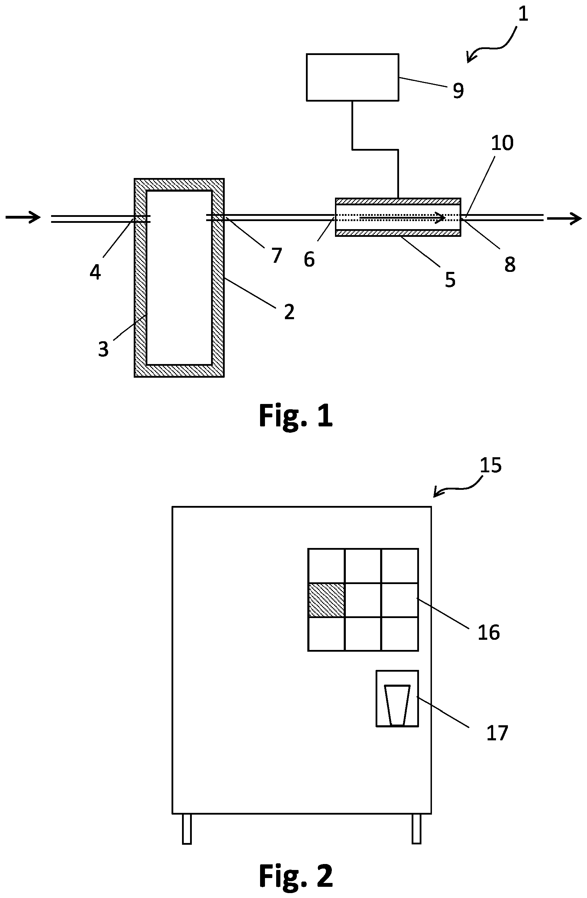

Fig. 1 zeigt eine schematische Darstellung einer Ausführungsform eines hydraulischen Systems 1.

Das hydraulische System 1 umfasst einen Boiler 2, welcher zum Bereitstellen von Warmwasser vorgesehen ist. Das Warmwasser ist in einem internen Tank 3 des Boilers 2 gespeichert.

Der Boiler 2 umfasst für gewöhnlich neben einem Heizelement, was beispielsweise eine Heizwendel, ein Heizstab oder ein anders gebildeter Heizwiderstand sein kann, auch einen Temperatursensor, welcher die Temperatur des im internen Tank 3 des Boiler 2 befindliche Wassers erfasst. Eine Regelungseinrichtung regelt die Temperatur des Wassers im internen Tank 3 des Boilers 2 auf die in ihrem Wert einstellbare vorbestimmte Boilerwassertemperatur T1.

Der interne Tank 3 des Boilers 2 kann dabei ein vielfältiges Volumen zum Speichern des Warmwassers aufweisen. Beispielsweise kann der interne Tank 3 ein Volumen zwischen 0,1 L bis 10 L aufweisen. Vorzugsweise weist der interne Tank 3 ein Volumen im Bereich von 0,4 L bis 1.2 L, besonders bevorzugt im Bereich von 0,4 L und 0,6 L, auf.

Ein Kaltwassereinlauf 4 des Boilers 2 ist zur Verbindung mit einem Wasseranschluss vorgesehen. Der Wasseranschluss kann ein herkömmlicher hydraulischer Anschluss sein, welcher in Verbindung zu einer Wasserversorgung steht und das hydraulische System 1 mit ausreichend Wasser versorgen kann.

Das hydraulische System 1 umfasst außerdem zumindest einen von dem Boiler 2 räumlich getrennt angeordneten Durchlauferhitzer 5. Der Durchlauferhitzer 5 ist ein Wassererhitzer, welcher dazu ausgelegt und vorgesehen ist, das Wasser im Durchfluss zu erhitzen. Der Durchlauferhitzer 5 ist insbesondere im Sinne einer Standardkomponente zu verstehen, welche von unterschiedlichen Anbietern bezogen werden kann und leicht in das System integrierbar ist. Der Durchlauferhitzer 5 weist dabei ein Heizelement oder mehrere Heizelemente zum Erhitzen des durchlaufenden Wassers auf.

Ein Warmwassereinlauf 6 des Durchlauferhitzers 5 ist mit einem Warmwasserauslauf 7 des Boilers 2 hydraulisch verbunden. Ein Heißwasserauslauf 8 des Durchlauferhitzers 5 ist zur hydraulischen Verbindung mit einer Getränkeausgabe 17 des Heißgetränkeautomaten 15 vorgesehen. Damit stellen Boiler 2 und Durchlauferhitzer 5 das Heißwasser 10 zur Zubereitung verschiedener von der Getränkeausgabe 17 bzw. dem Heißgetränkeautomaten 15 ausgebaren Heißgetränke bereit. Die verschiedenen Heißgetränke umfassen dabei Tee und Kaffee, sind aber nicht auf diese beschränkt. Vielmehr können die Heißgetränke noch Espresso, Instantgetränke, Kakaogetränke, Mischgetränke und/oder weitere Heißgetränke umfassen. Insbesondere sind in dem hydraulischen System 1 keine dem Durchlauferhitzer 5 vorgelagerten hydraulischen Verzweigungen entsprechend unterschiedlicher Heißgetränken oder Heißgetränkegruppen vorgesehen. Somit wird das Heißwasser für die verschiedenen Heißgetränke durch den gemeinsamen Boiler 2 und den gemeinsamen Durchlauferhitzer 5 erhitzt und bereitgestellt.

Sowohl der Wasseranschluss, als auch der Kaltwassereinlauf 4 und der Warmwasserauslauf 7 des Boilers 2 sowie der Warmwassereinlauf 6 und der Heißwasserauslauf 8 des Durchlauferhitzers 5 weisen hydraulische Verbindungsmittel auf, welche durch herkömmliche Rohrsysteme anschließbar sind. Dabei kann das Rohrsystem zur Verbindung zwischen den Anschlüssen auf unterschiedliche Rohrdurchmesser, wie beispielsweise DN 2 mm, DN 4 mm, DN 6 mm, DN 8 mm, 1/8 Zoll oder 1/4 Zoll ausgelegt sein. Auch können mehrere verschiedene Rohrgrößen abschnittsweise kombiniert werden.

Außerdem ist eine Steuereinrichtung 9 vorgesehen. Die Steuereinrichtung 9 ist dazu ausgelegt, den Durchlauferhitzer 5 zum Regulieren einer Temperatur von ausgegebenem Heißwasser 10 angepasst an eine zur Zubereitung der verschiedenen Heißgetränke vorbestimmte Zubereitungstemperatur Tzb variabel anzusteuern. Dazu ist vorgesehen, dass die Steuereinrichtung 9 insbesondere das/die Heizelement/e des Durchlauferhitzers 5 variabel ansteuert.

Die Steuereinrichtung 9 kann jegliche für die Anforderung geeignete Ausbildung aufweisen, wie beispielsweise als programmierbarer Mikrochip, als Softwaremodul auf einem PC, als Cloudanwendung oder dergleichen. Die Steuereinrichtung 9 ist in der Lage und dazu ausgelegt, die Heizleistung des Durchlauferhitzers 5 zu regulieren, was beispielsweise über eine Zweirichtungs-Thyristortriode- bzw. Triac- (Triode for Alternating Current) Schaltung oder Relaisschaltung erfolgen kann. Bevorzugt ist die Steuereinrichtung 9 außerdem dazu ausgebildet, die Netzspannung bei der Regulierung mit zu berücksichtigen. Auf diese Weise kann die Steuereinrichtung 9 beispielsweise mit einer Phasenanschnittsteuerung oder Phasenpaketsteuerung eine Leistungsaufnahme des Durchlauferhitzers 5 stufenlos regulieren.

Die Zubereitungstemperatur Tzb ist durch verschiedene Heißgetränke, welche mit der Getränkeausgabe 17 ausgebbar sind, vorbestimmt. Die vorbestimmte Zubereitungstemperatur Tzb ist somit auf mindestens zwei vorbestimmte Werte einstellbar, welche insbesondere basierend auf einer Auswahl des auszugebenden Heißgetränks einstellbar sind. So ist bei Zubereitung von Tee vorgesehen, die Temperatur des Heißwassers angepasst an eine vorbestimmte erste Zubereitungstemperatur, und bei Zubereitung von Kaffee die Temperatur des Heißwassers an eine vorbestimmte Zubereitungstemperatur zu regulieren. Die vorbestimmten Zubereitungstemperaturen können dabei jeweils gleiche Werte und/oder unterschiedlicher bzw. verschiede Werte umfassen. Insbesondere ist die Zubereitungstemperatur Tzb auf eine optimale Zubereitungstemperatur von Tee und Kaffee sowie, falls erwünscht, von anderen Getränken, wie beispielsweise Instantgetränken, Kakaogetränken und/oder Mischgetränken, einstellbar. Dabei ist die Zubereitungstemperatur Tzb nicht nur gemäß einer Art der Heißgetränke, beispielsweise des Tees oder des Kaffees, sondern auch gemäß optimaler Zubereitungstemperaturen jeweiliger Sorten, beispielsweise Teesorten wie Schwarzer Tee, Grüner Tee, Früchtetee usw., einstellbar. Das variable Ansteuern umfasst des Weiteren eine dynamische Einstellbarkeit der Zubereitungstemperatur, d.h. Temperaturprofile, während der Ausgabe der Getränke.

Die Steuereinrichtung 9 ist außerdem zur Aktivierung und Deaktivierung des Durchlauferhitzers 5 bei einem Nulldurchgang einer sinusförmigen Versorgungsspannung ausgelegt. So wird ein Auftreten eines Flickers in der Netzspannung minimiert. Zusätzlich wird mit einer Phasenanschnittsteuerung oder Phasenpaketsteuerung die Leistungsaufnahme noch in kleinere Stufen unterteilt. Dabei wird die dem Durchlauferhitzer 5 bereitgestellte elektrische Leistung nach jeder oder nach mehreren Sinusspannungen der Netzspannung stufenweise, beispielsweise in Stufen von 300W, erhöht. In weiteren Ausführungsformen erfolgt die Erhöhung in 100 W- oder 200 W-Schritten.

Fig. 2 zeigt eine schematische Darstellung einer Ausführungsform eines Heißgetränkeautomaten 15.

Der Heißgetränkeautomat 15 umfasst ein oben beschriebenes hydraulisches System 1. Außerdem ist eine Eingabeeinrichtung 16 zur Auswahl eines Heißgetränks vorgesehen. Die Eingabe kann dabei ein gewöhnliches Tastenfeld oder einen berührungsempfindlichen Bildschirm (Touchscreen) umfassen, mit welchem ein Heißgetränk ausgewählt werden kann. Außerdem ist eine Getränkeausgabe 17 zur Ausgabe des Heißgetränks vorgesehen. Die Getränkeausgabe 17 kann beispielsweise in Form einer Öffnung am Heißgetränkeautomaten 15 und/oder mit einer Klappvorrichtung vorgesehen sein. Aus der Getränkeausgabe 17 ist für gewöhnlich ein Behälter für ein Heißgetränk entnehmbar. Der Behälter kann beispielsweise ein Kaffeebecher sein, welcher von dem Getränkeautomaten 15 selbst ausgegeben wird. Auch können selbst mitgebrachte bzw. von außen eingestellte Behälter, wie Tassen oder Gläser, von einem Benutzer zunächst in der Getränkeausgabe 17 platziert werden, um das Heißgetränk in diese auszugeben.

Die Steuereinrichtung 9 ist bevorzugt zum Regulieren der Zubereitungstemperatur Tzb angepasst an ein mittels der Eingabeeinrichtung 16 ausgewähltes Heißgetränk ausgebildet. So kann eine optimale Wassertemperatur beim Zubereiten des Heißgetränks bereitgestellt werden, um so eine optimale Qualität des Heißgetränks zu erreichen.

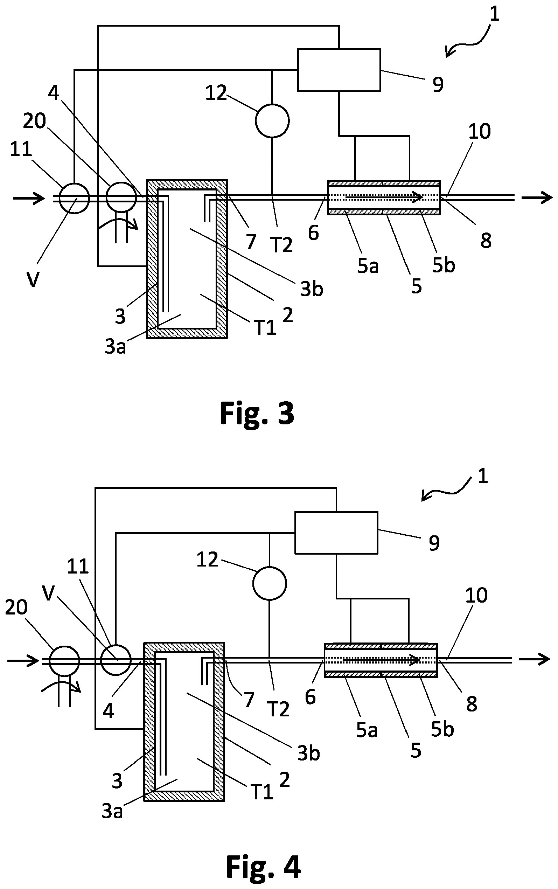

Fig. 3 zeigt eine schematische Darstellung einer Ausführungsform eines hydraulischen Systems 1.

Die Ausführungsform des in Fig. 3 basiert auf der in Fig. 1 gezeigten hydraulischen Systems 1, umfasst zusätzlich jedoch einen Flussmesser 11, welcher zum Erfassen eines Durchflusses V vorgesehen ist. Bei dem Flussmesser 11 kann es sich um jegliche Form von geeignetem Flussmesser 11 oder Sensor handeln, beispielsweise ein Wasservolumenstrommesser/-sensor, Strömungsgeschwindigkeitsmesser, Massendurchflussmesser oder dergleichen. Bei dem Durchfluss V handelt es sich entsprechend um die Ist-Größe des verwendeten Durchflussmessers 11 und kann beispielsweise ein Wasservolumenstrom oder ein Wassermassestrom sein. In dem hydraulischen System 1 entspricht die eingeführte Wassermenge, das heißt die Wassermasse bzw. das Wassergewicht des eingeführten Wassers, auch der ausgegebenen Wassermenge. Auf diese Weise kann leicht kontrolliert werden, wie viel Wasser verbraucht wird. In der in Figur 3 gezeigten Ausführungsform ist der Flussmesser 11 dem Boiler 2 und dem Durchlauferhitzer 5 vorgelagert angeordnet, sodass ein Volumenstrom bzw. Massenstrom ermittelt werden kann. Außerdem ist eine Pumpe 20 zu erkennen. Die Pumpe 20 kann einen Druck des Wassers in dem hydraulischen System steigern, wodurch auch der Durchfluss V gesteigert wird.

Bei dieser Ausführungsform des hydraulischen Systems 1 ist der Boiler 2 als Druckboiler ausgebildet, in dessen internem Tank 3 das Wasser unter einem vorbestimmten Druck steht. Daher sind der Druckboiler und in dessen Nachlauf angeordnete hydraulische Elemente für den entsprechenden Wasserdruck ausgelegt. Beispielsweise kann der Wasserdruck zwischen 2 bar und 20 bar, bevorzugt zwischen 8 bar und 12 barliegen. Der Wasserdruck wird dabei durch die vor dem Boiler 2 angeordnete Pumpe 20 erzeugt.

Der Flussmesser 11 ist dabei mit der Steuereinrichtung 9 verbunden. Der Durchfluss V kann so als Eingangsparameter für die Steuerung des Durchlauferhitzers 5 genutzt werden. Die Steuereinrichtung 9 ist dazu ausgelegt, den Durchlauferhitzer 5 zum Regulieren der Temperatur des Heißwassers 10 basierend auf dem Durchfluss V anzusteuern. Entsprechend leitet die Steuereinrichtung ab, wie viel Heizleistung des Durchlauferhitzers zum Erreichen der vorbestimmten Zubereitungstemperatur benötigt wird. Die Berechnung der Heizleistung des Durchlauferhitzers 5 kann neben dem Durchfluss V auch die Boilerwassertemperatur T1 und die Wärmekapazität des Wassers berücksichtigen. Auf diese Weise kann die Temperatur des Heißwassers 10 relativ genau reguliert werden, so dass die für das ausgewählte Getränk optimale Temperatur mit geringeren Abweichungstoleranzen erreicht wird.

Zur weiteren Steigerung der Genauigkeit der Wassertemperatursteuerung ist ein Warmwassertemperatursensor 12 zum Erfassen einer Warmwassertemperatur T2 zwischen dem Boiler 2 und dem Durchlauferhitzer 5 vorgesehen. In weiteren Ausführungsformen ist der Warmwassertemperatursensor unmittelbar vor dem Warmwassereinlauf 6 des Durchlauferhitzers 5 vorgesehen. Auf diese Weise kann eine nichtkonstante Temperatur des aus dem Boiler 2 auslaufenden Warmwassers ermittelt werden, welches durch eine Vermischung des in den Boiler 2 nachlaufenden Kaltwassers mit dem im Boiler 2 bevorrateten Warmwasser verursacht werden kann. Der Warmwassertemperatursensor 12 ist mit der Steuereinrichtung 9 verbunden, so dass die von dem Warmwassertemperatursensor 12 ermittelte Warmwassertemperatur T2 als Eingangsparameter für die Steuerung des Durchlauferhitzers 5 genutzt werden kann. Insbesondere erfolgt die Regelung des Durchlauferhitzers 5 ausschließlich anhand der Warmwassertemperatur T2 an dem Warmwassertemperatursensor 12. Die Boilerwassertemperatur T1 bzw. die theoretische Warmwassertemperatur im Boiler 2 geht hierbei insbesondere nicht in die Regelung oder Steuerung des Durchlauferhitzers 5 ein. So ist die Steuereinrichtung 9 dazu ausgelegt, den Durchlauferhitzer 5 zum Regulieren der Temperatur des Heißwassers 10 basierend auf der Warmwassertemperatur T2 und des Durchflusses V anzusteuern. Auf diese Weise wird die korrekte Ist-Temperatur am Durchlauferhitzer 5 erfasst. Daraus resultiert bei der Ansteuerung in der Regel eine Bereitstellung einer erhöhten elektrischen Leistung für den Durchlauferhitzer 5, um die vorbestimmte Zubereitungstemperatur Tzb trotz des Temperaturabfalls zu erreichen.

In Fig. 3 ist außerdem zu erkennen, dass der Durchlauferhitzer 5 eine erste Heizstufe 5a und eine zweite Heizstufe 5b aufweist. Die Heizstufen sind dabei für gewöhnlich durch zumindest zwei voneinander getrennte Heizelemente realisiert. So kann eine differenzierte Regulierung der Temperatur im Durchlauferhitzer 5 erzielt werden. Die zwei Heizstufen 5a, 5b erlauben auch die Verwendung von baulich kleineren Heizelementen. In weiteren Ausführungsformen können auch zwei oder mehr hintereinander oder in Reihe angeschlossener Durchlauferhitzer 5 mit jeweils nur einer Heizstufe vorgesehen sein.

Eine erste maximale elektrische Leistungsaufnahme der ersten Heizstufe 5a ist bevorzugt kleiner als eine zweite maximale elektrische Leistungsaufnahme der zweiten Heizstufe 5b vorgesehen. In weiteren Ausführungsformen kann die erste maximale elektrische Leistungsaufnahme der ersten Heizstufe 5a auch gleich der zweiten maximalen elektrischen Leistungsaufnahme der zweiten Heizstufe 5b vorgesehen sein. Dadurch kann auf einfache Weise eine Leistungsentnahme aus dem Stromnetz flexibler gestaltet werden, was beispielsweise zum Verhindern eines Flickers, das heißt einer elektrischen Spannungsschwankung, genutzt werden kann.

Bevorzugt liegt die erste maximale elektrische Leistungsaufnahme der ersten Heizstufe 5a in einem Bereich von 400 W bis 600 W, es sind jedoch auch erste maximale elektrische Leistungsaufnahmen im Bereich von 100 W bis 1000 W denkbar. Die zweite maximale elektrische Leistungsaufnahme der zweiten Heizstufe 5b liegt bevorzugt in einem Bereich von 1200 W bis 1400 W, es sind jedoch erste maximale elektrische Leistungsaufnahmen im Bereich von 1000 W bis 2000 W denkbar. Eine maximale elektrische Gesamtleistungsaufnahme des Durchlauferhitzers 5 liegt dabei bevorzugt in einem Bereich von 1500 W bis 2000 W, wobei auch Gesamtleistungsaufnahmen bis 2500W denkbar sind. Somit kann der Durchlauferhitzer 5 aus einem herkömmlichen Haushaltsstromnetz, beispielsweise in Deutschland mit 230 V Netzspannung, bzw. aus einer gewöhnlichen Haushaltssteckdose versorgt werden.

Das Kaltwasser wird über den Kaltwassereinlauf 4 radial auf fast der ganzen Boilerhöhe in den internen Tank 3 des Boilers 2 eingespült. Das Warmwasser wird mittels eines nur in den oberen Bereich 3b des internen Tanks 3 reichenden Auslaufrohrs entnommen. Bei weiteren Ausführungsformen kann der Kaltwassereinlauf 4 auch direkt in einem unteren Bereich 3a des internen Tanks 3 und der Warmwasserauslauf direkt im oberen Bereich 3b des internen Tanks 3 angeordnet sein. Diese Ausbildung des Boilers minimiert die Vermischung des nachlaufenden Kaltwassers mit dem auslaufenden Warmwassers.

Fig. 4 zeigt eine schematische Darstellung einer noch weiteren Ausführungsform eines hydraulischen Systems 1.

Die in Figur 4 gezeigte Ausführungsform des hydraulischen Systems 1 basiert auf der in Figur 3 dargestellten Ausführungsform des hydraulischen Systems 1.

Im Unterschied zur Ausführungsform der Figur 3 ist in der in Figur 4 gezeigten Ausführungsform der Flussmesser 11 zwischen dem Wasseranschluss und dem Kaltwassereinlauf 4 des Boilers 2, jedoch bereits im Bereich erhöhten Drucks, d. h. im Nachlauf der Pumpe 20 angeordnet. Die gezeigte Anordnung stellt somit eine weitere Möglichkeit einer Anordnung des Flussmessers 11 zwischen Boiler 2 und Durchlauferhitzer 5 dar.

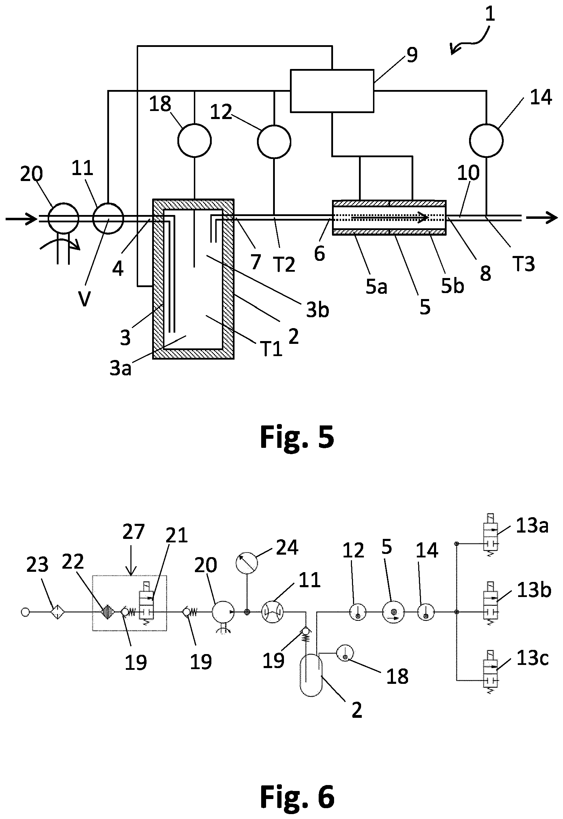

Fig. 5 zeigt eine schematische Darstellung einer noch weiteren Ausführungsform eines hydraulischen Systems 1.

Das in Figur 5 dargestellte hydraulische System 1 basiert auf dem in Figur 3 gezeigten hydraulischen System 1, weist jedoch zusätzlich einen dem Durchlauferhitzer 5 nachgelagerten Heißwassertemperatursensor 14 auf, welcher zur Erfassung der Heißwassertemperatur T3 vorgesehen ist. Der Heißwassertemperatursensor 14 ist ebenfalls mit der Steuereinrichtung 9 verbunden. Mit der erfassten Heißwassertemperatur T3 wird somit ein zusätzlicher Parameter für die Steuerung des Durchlauferhitzers 5 bereitgestellt.

Die Steuereinrichtung 9 ist in dieser Ausführungsform des hydraulischen Systems 1 als Regelungseinrichtung zum Ansteuern des Durchlauferhitzers 5 zur Regulierung der vorbestimmten Zubereitungstemperatur Tzb ausgelegt. Die Ansteuerung zur Regulierung der vorbestimmten Zubereitungstemperatur Tzb basiert auf einer Differenz zwischen der vorbestimmten Zubereitungstemperatur Tzb und der ermittelten Warmwassertemperatur T2 und wird durch die Regelabweichung zwischen der Heißwassertemperatur T3 und der Zubereitungstemperatur Tzb ergänzt. Durch diese Regelung wird die Differenz zwischen der vorbestimmten Zubereitungstemperatur Tzb und der ermittelten tatsächlichen Heißwassertemperatur T3 reduziert, so dass die für das ausgewählte Heißgetränk Heißwasser einer optimalen Temperatur bereitgestellt wird.

Fig. 6 zeigt eine schematische Darstellung einer noch weiteren Ausführungsform eines hydraulischen Systems 1.

Die in Figur 6 gezeigte Ausführungsform des hydraulischen Systems 1 basiert auf der in Figur 5 dargestellten Ausführungsform des hydraulischen Systems 1. Das gezeigte hydraulische System 1 enthält ferner einen Filter 23, welcher größere Partikel in dem von einem Wasseranschluss kommenden Wasser herausfiltert. Es folgt eine nachgelagerte Schmutzfängereinheit 27 mit Absperrfunktion, welche einen Schmutzfänger 22, ein Rückschlagventil 19 und ein Einlassventil 21 enthält. Mit dem Schmutzfänger 22 können noch kleinere Partikel aus dem Wasser gefiltert und das Wasser gereinigt werden. Das Einlassventil 21 wird zum Sperren und Entsperren der Wasserversorgung für das hydraulische System 1 verwendet.

Der Schmutzfängereinheit 27 nachgelagert ist die Pumpe 20 angeordnet, welche den Druck des durchfließenden Wassers auf beispielsweise 10 bar erhöht. Als Pumpe 20 wird bevorzugt eine Flügelzellenpumpe oder Schwingkolbenpumpe verwendet, die Pumpe 20 ist aber auf eine solche nicht beschränkt. Ein Rückschlagventil 19 zum Verhindern eines Wasserrücklaufs ist vor der Pumpe 20 angeschlossen. Zum Kontrollieren des Wasserdrucks ist ein der Pumpe nachgelagerter Drucksensor 24 angeschlossen. In einer Ausführungsform ist der Drucksensor 24 beispielsweise als Manometer ausgebildet.

Analog zu den Ausführungsformen der Figuren 3 bis 5 ist der Flussmesser 11 dem Kaltwassereinlauf 4 des Boilers 2 vorgelagert angeordnet. Zwischen dem Flussmesser 11 und dem hier ebenfalls als Druckboiler ausgebildeten Boiler 2 ist ein weiteres Rückschlagventil 19 angeordnet, welches ein Zurücklaufen des Warmwassers verhindert.

In der in Figur 6 gezeigten Ausführungsform des hydraulischen Systems 1 ist die vorbestimmte Zubereitungstemperatur Tzb auf mindestens drei verschiedene Werte einstellbar, welche je nach ausgewähltem Heißgetränk über drei Ausgangsventile 13a, 13b, 13c des hydraulischen Systems 1 ausgebbar sind. Selbstverständlich ist auch bei weiteren Ausführungsformen eine andere Anzahl an Ausgangsventilen 13a, 13b, 13c vorstellbar. Beispielsweise kann die Anzahl der Ausgangsventile je nach Ausstattung des Gerätes bzw. Anzahl der eingebauten Mixer angepasst vorgesehen sein. Die Ausgangsventile 13a, 13b, 13c sind zum Steuern eines Ausflusses von Heißwasser 10 jeweils vorbestimmter, insbesondere unterschiedlicher, Temperaturen zur Zubereitung unterschiedlicher Heißgetränke vorgesehen, welche zumindest Tee und Kaffee umfassen. So ist in dieser Ausführungsform des hydraulischen Systems 1 das erste Ausgangsventil 13a zum Ausgeben von Heißwasser 10 mit einer Temperatur von ca. 98 °C beispielsweise zur Zubereitung von Tee vorgesehen. Das zweite Ausgangsventil 13b ist für eine Temperatur von ca. 94 °C zur Zubereitung von Kaffee oder kaffeeähnlichen Heißgetränken, wie beispielsweise Espresso vorgesehen. In diesem Fall ist ein dem zweiten Ausgangsventil 13b nachgelagerte Brüher, eine Brühgruppe oder eine Brüheinheit (nicht gezeigt) vorgesehen, welche an das zweite Ausgangsventil 13b angeschlossen ist und durch welche das unter Druck stehende Heißwasser 10 fließt. Das dritte Ausgangsventil 13c ist hier für Instant-Heißgetränke, wie beispielsweise Instant-Kaffeevarianten, Kakaogetränken, Mischgetränken und/oder Toppings, vorgesehen, welche üblicherweise mit einer Temperatur von 75 °C zubereitet werden. Je nach Einstellung der Boilerwassertemperatur T1 kann es sein, dass bei Auswahl eines solchen Heißgetränks der Durchlauferhitzer 5 nicht aktiviert werden muss. Ein dem dritten Getränkeventil 13c nachgelagerter Mischer kann dabei zur Zubereitung des Instant-Heißgetränks vorgesehen und an das dritte Ausgangsventil 13c angeschlossen sein.

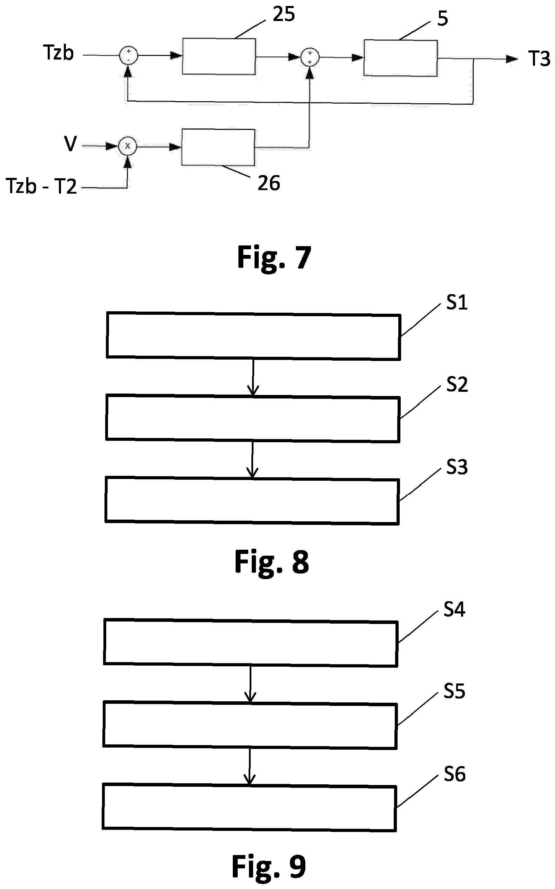

Fig. 7 zeigt eine schematische Darstellung einer Regelung eines hydraulischen Systems 1.

Hierbei ist ein Regler 25 vorgesehen, welcher die von dem Heißwassertemperatursensor erfasste Heißwassertemperatur 'T3 als Regelgröße gemäß der vorbestimmten Temperatur Tzb als Führungsgröße bzw. Sollwert regelt. Der Regler ist bevorzugt als PID-Regler ausgebildet, in weiteren Ausführungsformen kann er aber auch nur als P-, oder PI-Regler vorgesehen sein. Ferner sind weitere Arten von Reglern 25 denkbar.

Die Regelstrecke bildet der Durchlauferhitzer 5, bzw. dessen Heizelement/e. Mit einer Vorsteuerung 26, insbesondere einer sogenannten Feed Forward Control, wird der von dem Flussmesser 11 erfasste Durchfluss V und/oder die Differenz aus der vorbestimmten Zubereitungstemperatur Tzb und der von dem Warmwassertemperatursensor 12 erfassten Warmwassertemperatur T2 in den Regelkreis eingebracht, während die Heißwassertemperatur T3 zur Minimierung der Regelabweichung ergänzend als Parameter hinzugezogen wird, so dass die für den Durchlauferhitzer 5 benötige Leistung zum Erhitzen des Wassers vorberechnet werden kann. Die Leistung zum Erhitzen des Wassers im Durchlauferhitzer 5 wird über einen als Stellglied wirkendes Triac, Relais oder Schalter geschaltet.

Fig. 8 zeigt eine schematische Darstellung eines Verfahrens zur Herstellung eines hydraulischen Systems 1.

Das so hergestellte hydraulische System 1 ist bevorzugt für einen weiter oben beschriebenen Heißgetränkeautomaten 15 vorgesehen.

Das Verfahren umfasst das Bereitstellen S1 eines Boilers 2 zur Versorgung mit Warmwasser aus einem internen Tank 3 des Boilers 2. Weiter ist ein Verbinden S2 eines Warmwasserauslaufs 7 des Boilers 2 mit einem Warmwassereinlauf 6 zumindest eines von dem Boiler 2 räumlich getrennt angeordneten Durchlauferhitzers 5 vorgesehen. Es kann ein einzelner Durchlauferhitzer 5, oder eine Vielzahl von hintereinander oder in Reihe angeschlossen Durchlauferhitzern 5 vorgesehen sein. Ein Heißwasserauslauf 8 des Durchlauferhitzers 5 wird zur Verbindung mit einer Getränkeausgabe 17 des Heißgetränkeautomaten 15 vorgesehen. So wird aus dem Durchlauferhitzer 5 auslaufendes Heißwasser 10 zur Zubereitung von verschiedenen durch die Getränkeausgabe 17 des Heißgetränkeautomaten 15 ausgebbaren Heißgetränken vorgesehen. Die verschiedenen Heißgetränke umfassen zumindest Tee und Kaffee.

Ein weiterer Schritt umfasst das Verbinden S3 einer Steuereinrichtung 9 mit dem Durchlauferhitzer 5. Die Steuereinrichtung 9 ist zum variablen Ansteuern des Durchlauferhitzers 5 ausgelegt, um eine Temperatur des auslaufenden Heißwassers 10 angepasst an eine jeweils zur Zubereitung der verschiedenen Heißgetränke vorbestimmte Zubereitungstemperatur Tzb zu regulieren. Insbesondere kann zur Zubereitung von Tee die Temperatur des Heißwassers 10 an eine angepasste erste Zubereitungstemperatur, und bei der Zubereitung von Kaffee an eine angepasste zweite Zubereitungstemperatur, reguliert werden.

Fig. 9 zeigt eine schematische Darstellung eines Verfahrens zum Ausgeben eines Heißgetränks.

Das Verfahren zum Ausgeben eines Heißgetränks ist für einen Heißgetränkeautomaten 15, wie er beispielsweise weiter oben beschrieben wurde, vorgesehen. Es umfasst den Schritt eines Auswählens S4 eines gewünschten Heißgetränks aus einer Auswahl verschiedener von einer Getränkeausgabe 17 des Heißgetränkeautomaten 15 ausgebbaren Heißgetränke, wobei die verschiedenen Heißgetränke zumindest Kaffee und Tee umfassen, an einer Eingabeeinrichtung 16 des Heißgetränkeautomaten 15. Ferner ist das Fördern S5 von Warmwasser aus einem internen Tank 3 eines Boilers 2 in einen räumlich davon getrennt angeordneten Durchlauferhitzer 5 vorgesehen. Es kann ein einzelner Durchlauferhitzer 5, oder eine Vielzahl von hintereinander und/oder in Reihe angeschlossen Durchlauferhitzern 5 vorgesehen sein. Ein weiterer Schritt bildet das variable Ansteuern S6 des Durchlauferhitzers 5 mit einer Steuereinrichtung 9 zum Regulieren einer Temperatur des aus dem Durchlauferhitzer 5 auslaufenden Heißwassers 10 angepasst an eine gemäß dem ausgewählten Heißgetränk vorbestimmte Zubereitungstemperatur Tzb. Das Regulieren der Temperatur des Heißwassers erfolgt insbesondere zur Zubereitung von Tee angepasst an eine vorbestimmte erste Zubereitungstemperatur, und zur Zubereitung von Kaffee angepasst an eine vorbestimmte zweite Zubereitungstemperatur. die beschriebenen Temperaturbereiche für das Warmwasser, das Heißwasser 10 oder für ausgewählte Heißgetränke sind nur beispielhaft und können auf andere Temperaturbereiche leicht angepasst werden. Ferner ist der Wasserdruck in den obigen Ausführungsformen nur beispielhaft und kann ebenso angepasst werden. Die in den obigen Ausführungsformen gewählte Anzahl an Getränkeventilen, bzw. die Anzahl an möglichen, durch das hydraulische System 1 erhitzbare vorbestimmten Zubereitungstemperaturen Tzb ist ebenso nur beispielhaft und kann vielfältig gestaltet werden. So können insbesondere auch vier, fünf, sechs oder mehr Ausgangsventile mit jeweils einer oder mehreren unterschiedlichen vorbestimmten Zubereitungstemperaturen Tzb in einem hydraulischen System 1 vorgesehen sein.

### Bezugszeichenliste

- 1: hydraulisches System
- 2: Boiler
- 3: interner Tank des Boilers
- 3a: unterer Bereich des internen Tanks
- 3b: oberer Bereich des internen Tanks
- 4: Kaltwassereinlauf
- 5: Durchlauferhitzer
- 5a: erste Heizstufe des Durchlauferhitzers
- 5b: zweite Heizstufe des Durchlauferhitzers
- 6: Warmwassereinlauf
- 7: Warmwasserauslauf
- 8: Heißwasserauslauf
- 9: Steuereinrichtung
- 10: Heißwasser
- 11: Flussmesser
- 12: Warmwassertemperatursensor
- 13a, 13b, 13c: Ausgangsventile
- 14: Heißwassertemperatursensor
- 15: Heißgetränkautomat
- 16: Eingabeeinrichtung
- 17: Getränkeausgabe
- 18: Boilerwassertemperatursensor
- 19: Rückschlagventil
- 20: Pumpe
- 21: Einlassventil
- 22: Schmutzfänger
- 23: Filtereinheit
- 24: Drucksensor
- 25: Regler
- 26: Vorsteuerung
- 27: Schmutzfängereinheit
- T1: Boilerwassertemperatur
- T2: Warmwassertemperatur
- T3: Heißwassertemperatur
- V: Durchfluss

## Patentansprüche

1. Hydraulisches System (1) für einen Heißgetränkeautomaten (15), mit:
einem Boiler (2) zum Bereitstellen von Warmwasser aus einem internen Tank (3) des Boilers (2), wobei ein Kaltwassereinlauf (4) des Boilers zur Verbindung mit einem Wasseranschluss vorgesehen ist;
zumindest einem von dem Boiler (2) räumlich getrennt angeordneten Durchlauferhitzer (5), wobei ein Warmwassereinlauf (6) des Durchlauferhitzers (5) mit einem Warmwasserauslauf (7) des Boilers (2) verbunden ist und ein Heißwasserauslauf (8) des Durchlauferhitzers (5) zur Verbindung mit einer Getränkeausgabe (17) des Heißgetränkeautomaten (15) vorgesehen ist, wobei aus dem Durchlauferhitzer (5) auslaufendes Heißwasser (10) zur Zubereitung von verschiedenen durch die Getränkeausgabe (17) ausgebbaren Heißgetränken vorgesehen ist, welche zumindest Tee und Kaffee umfassen; und
einer Steuereinrichtung (9), welche dazu ausgelegt ist, den Durchlauferhitzer (5) zum Regulieren einer Temperatur des Heißwassers (10) angepasst an eine jeweils zur Zubereitung der verschiedenen Heißgetränke vorbestimmte Zubereitungstemperatur (Tzb), welche bei Zubereitung von Tee eine vorbestimmte erste Zubereitungstemperatur und bei Zubereitung von Kaffee eine vorbestimmte zweite Zubereitungstemperatur ist, variabel anzusteuern;
**dadurch gekennzeichnet, dass** die Steuereinrichtung (9) zur Aktivierung des Durchlauferhitzers (5) und/oder Deaktivierung des Durchlauferhitzers (5) bei einem Nulldurchgang einer sinusförmigen Versorgungsspannung ausgelegt ist.

2. Hydraulisches System nach Anspruch 1,
**dadurch gekennzeichnet,**
**dass** ein Flussmesser (11) zum Erfassen eines Durchflusses (V) vorgesehen ist, wobei der Flussmesser (11) mit der Steuereinrichtung (9) verbunden ist, und wobei die Steuereinrichtung (9) dazu ausgelegt ist, den Durchlauferhitzer (5) zum Regulieren der Temperatur des Heißwassers (10) basierend auf dem erfassten Durchfluss (V) anzusteuern.

3. Hydraulisches System nach Anspruch 2,
**dadurch gekennzeichnet,**
**dass** ein Warmwassertemperatursensor (12) zum Erfassen einer Warmwassertemperatur (T2) zwischen dem Boiler (2) und dem Durchlauferhitzer (5) vorgesehen ist, wobei der Warmwassertemperatursensor (12) mit der Steuereinrichtung (9) verbunden ist, und die Steuereinrichtung (9) dazu ausgelegt ist, den Durchlauferhitzer (5) zum Regulieren der Temperatur des Heißwassers (10) basierend auf der Warmwassertemperatur (T2), insbesondere basierend auf einer Differenz zwischen der vorbestimmten Zubereitungstemperatur (Tzb) und der ermittelten Warmwassertemperatur (T2), und/oder basierend auf dem Durchfluss (V) anzusteuern.

4. Hydraulisches System nach einem der vorstehenden Ansprüche,
**dadurch gekennzeichnet,**
**dass** der Durchlauferhitzer (5) zumindest eine erste Heizstufe (5a) und eine zweite Heizstufe (5b) aufweist, wobei eine erste maximale elektrische Leistungsaufnahme der ersten Heizstufe (5a) bevorzugt kleiner als eine zweite maximale elektrische Leistungsaufnahme der zweiten Heizstufe (5b) vorgesehen ist.

5. Hydraulisches System nach Anspruch 4,
**dadurch gekennzeichnet,**
**dass** die erste maximale elektrische Leistungsaufnahme der ersten Heizstufe (5a) in einem Bereich von 100 W bis 1000 W, insbesondere 400 W bis 600 W, liegt, und die zweite maximale elektrische Leistungsaufnahme der zweiten Heizstufe (5b) in einem Bereich von 1000 W bis 2000 W, insbesondere 1200 W bis 1400 W, liegt, wobei eine maximale elektrische Gesamtleistungsaufnahme des Durchlauferhitzers (5) im Bereich von 1500 W bis 2500 W, insbesondere 1500 W bis 2000 W, liegt.

6. Hydraulisches System nach Anspruch 4 oder 5,
**dadurch gekennzeichnet,**
**dass** die Steuereinrichtung (9) zur Aktivierung der ersten Heizstufe (5a) des Durchlauferhitzers (5) und/oder der zweiten Heizstufe (5b) des Durchlauferhitzers (5) bei einem Nulldurchgang einer sinusförmigen Versorgungsspannung ausgelegt ist.

7. Hydraulisches System nach einem der vorstehenden Ansprüche,
**dadurch gekennzeichnet,**
**dass** der Boiler (2) als Druckboiler ausgebildet ist, wobei der Druckboiler und in dessen Nachlauf angeordnete hydraulische Elemente, insbesondere der Durchlauferhitzer (5) und Verbindungen zwischen dem Druckboiler, dem Durchlauferhitzer (5) und den Ausgabeventilen (13a, 13b, 13c), für einen Wasserdruck zwischen 2 bar und 20 bar, insbesondere zwischen 8 bar und 12 bar, ausgelegt sind.

8. Hydraulisches System nach Anspruch 3,
**dadurch gekennzeichnet,**
**dass** ein dem Durchlauferhitzer (5) nachgelagerter Heißwassertemperatursensor (14) zur Erfassung einer Heißwassertemperatur (T3) vorgesehen ist, wobei der Heißwassertemperatursensor (14) mit der Steuereinrichtung (9) verbunden ist, und wobei die Steuereinrichtung (9) als Regelungseinrichtung zum Ansteuern des Durchlauferhitzers (5) zusätzlich basierend auf einer Differenz zwischen der vorbestimmten Zubereitungstemperatur (Tzb) und der ermittelten Heißwassertemperatur (T3) ausgelegt ist.

9. Heißgetränkeautomat (15), mit
einer Getränkeausgabe (17), und
einem mit der Getränkeausgabe gekoppelten hydraulischen System (1) nach einem der vorangehenden Ansprüche.

10. Heißgetränkeautomat (15) nach Anspruch 9,
**dadurch gekennzeichnet,**
**dass** das hydraulische System mit der Getränkeausgabe (17) zur Zubereitung aller verschiedener durch die Getränkeausgabe (17) ausgebbarer Heißgetränke mit dem aus dem Durchlauferhitzer (5) auslaufenden Heißwasser (10) gekoppelt ist.

11. Heißgetränkeautomat (15) nach Anspruch 9 oder 10,
**dadurch gekennzeichnet,**
**dass** eine Eingabeeinrichtung (16) zur Auswahl eines auszugebenden Heißgetränks durch einen Nutzer vorgesehen ist;
wobei die Steuereinrichtung (9) zum Regulieren der Temperatur des Heißwassers (10) angepasst an eine jeweilige optimale Zubereitungstemperatur eines mittels der Eingabeeinrichtung (16) ausgewählten Heißgetränks ausgelegt ist, welche insbesondere für Tee, Kaffee, Espresso, Instantgetränke, Kakaogetränke und/oder Mischgetränke sowie entsprechenden Sorten und Geschmacksrichtungen jeweils individuell einstellbar ist.

12. Verfahren zur Herstellung eines hydraulischen Systems (1) für einen Heißgetränkeautomaten (15), insbesondere eines hydraulischen Systems nach einem der Ansprüche 1 bis 8, mit den Schritten:
Bereitstellen (S1) eines Boilers (2) zur Versorgung mit Warmwasser aus einem internen Tank (3) des Boilers (2);
Verbinden (S2) eines Warmwasserauslaufs (7) des Boilers (2) mit einem Warmwassereinlauf (6) zumindest eines von dem Boiler (2) räumlich getrennt angeordneten Durchlauferhitzers (5), wobei ein Heißwasserauslauf (8) des Durchlauferhitzers (5) zur Verbindung mit einer Getränkeausgabe (17) des Heißgetränkeautomaten (15) vorgesehen wird, wobei aus dem Durchlauferhitzer (5) auslaufendes Heißwasser (10) zur Zubereitung von verschiedenen durch die Getränkeausgabe (17) ausgebbaren Heißgetränken vorgesehen wird, wobei die verschiedenen Heißgetränke zumindest Tee und Kaffee umfassen;
Verbinden (S3) einer Steuereinrichtung (9) mit dem Durchlauferhitzer (5), welche zum variablen Ansteuern des Durchlauferhitzers (5) zum Regulieren einer Temperatur des auslaufenden Heißwassers (10) angepasst an eine jeweils zur Zubereitung der verschiedenen von der Getränkeausgabe (17) ausgebbaren Heißgetränke vorbestimmte Zubereitungstemperatur, welche bei Zubereitung von Tee eine vorbestimmte erste Zubereitungstemperatur und bei Zubereitung von Kaffee eine vorbestimmte zweite Zubereitungstemperatur ist, ausgebildet ist;
**dadurch gekennzeichnet, dass** die Steuereinrichtung (9) zur Aktivierung des Durchlauferhitzers (5) und/oder Deaktivierung des Durchlauferhitzers (5) bei einem Nulldurchgang einer sinusförmigen Versorgungsspannung ausgelegt ist.

13. Verfahren zum Ausgeben eines Heißgetränks, insbesondere mit einem Heißgetränkeautomaten nach einem der Ansprüche 9 bis 11, mit den Schritten:
Auswählen (S4) eines gewünschten Heißgetränks aus einer Auswahl verschiedener von einer Getränkeausgabe (17) des Heißgetränkeautomaten (15) ausgebbaren Heißgetränke, wobei die verschiedenen Heißgetränke zumindest Kaffee und Tee umfassen, an einer Eingabeeinrichtung (16) des Heißgetränkeautomaten (15);
Fördern (S5) von Warmwasser aus einem internen Tank (3) eines Boilers (2) in einen räumlich davon getrennt angeordneten Durchlauferhitzer (5); und
Variables Ansteuern (S6) des Durchlauferhitzers (5) mit einer Steuereinrichtung (9) zum Regulieren einer Temperatur des aus dem Durchlauferhitzer (5) auslaufenden Heißwassers (10) angepasst an eine gemäß dem ausgewählten Heißgetränk vorbestimmte Zubereitungstemperatur (Tzb), welche bei Zubereitung von Tee eine vorbestimmte erste Zubereitungstemperatur und bei Zubereitung von Kaffee eine vorbestimmte zweite Zubereitungstemperatur ist;
2. **dadurch gekennzeichnet, dass** die Steuereinrichtung (9) zur Aktivierung des Durchlauferhitzers (5) und/oder Deaktivierung des Durchlauferhitzers (5) bei einem Nulldurchgang einer sinusförmigen Versorgungsspannung ausgelegt ist.

## Claims

1. Hydraulic system (1) for a hot drinks machine (15), comprising:
a boiler (2) for preparing hot water from an internal tank (3) of the boiler (2), a cold water inlet (4) of the boiler being provided for connection to a water supply;
at least one flow heater (5) arranged physically separately from the boiler (2), a hot water inlet (6) of the flow heater (5) being connected to a water outlet (7) of the boiler (2) and a hot water outlet (8) of the flow heater (5) being provided for connection to a drinks output (17) of the hot drinks machine (15), hot water (10) which flows out of the flow heater (5) being provided for preparing various hot drinks which can be outputted by the drinks output (17), including at least tea and coffee; and
a control device (9) configured to actuate the flow heater (5) variably so as to regulate a temperature of the hot water (10) in a manner adapted to a preparation temperature (Tzb) predetermined for preparing each of the various hot drinks, this being a predetermined first preparation temperature if tea is being prepared and a predetermined second preparation temperature if coffee is being prepared;
**characterised in that** the control device (9) is configured to activate the flow heater (5) and/or to deactivate the flow heater (5) at a zero of a sinusoidal supply voltage.

2. Hydraulic system according to claim 1,
**characterised**
**in that** a flowmeter (11) for detecting a throughput (V) is provided, the flowmeter (11) being connected to the control device (9) and the control device (9) being configured to actuate the flow heater (5) so as to regulate the temperature of the hot water (10) on the basis of the detected throughput (V).

3. Hydraulic system according to claim 2,
**characterised**
**in that** a hot water temperature sensor (12) for detecting a hot water temperature (T2) is provided between the boiler (2) and the flow heater (5), the hot water temperature sensor (12) being connected to the control device (9) and the control device being configured to actuate the flow heater (5) so as to regulate the temperature of the hot water (10) on the basis of the hot water temperature (T2), in particular on the basis of a difference between the predetermined preparation temperature (Tzb) and the determined hot water temperature (T2), and/or on the basis of the throughput (V).

4. Hydraulic system according to any of the preceding claims,
**characterised**
**in that** the flow heater (5) has at least a first heating stage (5a) and a second heating stage (5b), a first maximum electrical power uptake of the first heating stage (5a) preferably being provided to be less than a second maximum electrical power uptake of the second heating stage (5b).

5. Hydraulic system according to claim 4,
**characterised**
**in that** the first maximum electrical power uptake of the first heating stage (5a) is in a range of 100 W to 1000 W, in particular 400 W to 600 W, and the second maximum electrical power uptake of the second heating stage (5b) is in a range of 1000 W to 2000 W, in particular 1200 W to 1400 W, a maximum total electrical power uptake of the flow heater (5) being in a range of 1500 W to 2500 W, in particular 1500 W to 2000 W.

6. Hydraulic system according to either claim 4 or claim 5,
**characterised**
**in that** the control device (9) is configured to activate the first heating stage (5a) of the flow heater (5) and/or the second heating stage (5b) of the flow heater (5) at a zero of a sinusoidal supply voltage.

7. Hydraulic system according to any of the preceding claims,
**characterised**
**in that** the boiler (2) is formed as a pressurised boiler, the pressurised boiler and hydraulic elements arranged downstream therefrom, in particular the flow heater (5) and connections between the pressurised boiler, flow heater (5) and output valves (13a, 13b, 13c), being configured for a water pressure between 2 bar and 20 bar, in particular between 8 bar and 12 bar.

8. Hydraulic system according to claim 3,
**characterised**
**in that** a hot water temperature sensor (14) downstream from the flow heater (5) is provided for detecting a hot water temperature (T3), the hot water temperature sensor (14) being connected to the control device (9) and the control device (9) being configured as a regulation device for actuating the flow heater (5), additionally, on the basis of a difference between the predetermined preparation temperature (Tzb) and the determined hot water temperature (T3) .

9. Hot drinks machine (15), comprising
a drinks output (17) and
a hydraulic system (1) according to any of the preceding claims coupled to the drinks output.

10. Hot drinks machine (15) according to claim 9,
**characterised**
**in that** the hydraulic system is coupled to the drinks output (17) for preparing all the various hot drinks which can be outputted through the drinks output (17) using the hot water (10) flowing out of the flow heater (5).

11. Hot drinks machine (15) according to either claim 9 or claim 10,
**characterised**
**in that** an input device (16) for a user to select a hot drink to be outputted is provided;
the control device (9) being configured to regulate the temperature of the hot water (10) in a manner adapted to an optimum preparation temperature of each hot drink selected using the input device (16), which can be set individually in each case, in particular for tea, coffee, espresso, instant drinks, cocoa drinks and/or mixed drinks as well as corresponding variants and flavours.

12. Method for producing a hydraulic system (1) for a hot drinks machine (15), in particular of a hydraulic system according to any of claims 1 to 8, comprising the steps of:
providing (S1) a boiler (2) for supplying hot water from an internal tank (3) of the boiler (2);
connecting (S2) a hot water outlet (7) of the boiler (2) to a hot water inlet (6) of at least one flow heater (5) arranged physically separately from the boiler (2), a hot water outlet (8) of the flow heater (5) being provided for connection to a drinks output (17) of the hot drinks machine (15), hot water (10) which flows out of the flow heater (5) being provided for preparing various hot drinks which can be outputted by the drinks output (17), the various hot drinks including at least tea and coffee; and
connecting (S3) to the flow heater (5) a control device (9) configured to actuate the flow heater (5) variably so as to regulate a temperature of the hot water (10) which flows out in a manner adapted to a preparation temperature predetermined for preparing each of the various hot drinks which can be outputted by the drinks output (17), this being a predetermined first preparation temperature if tea is being prepared and a predetermined second preparation temperature if coffee is being prepared;
**characterised in that** the control device (9) is configured to activate the flow heater (5) and/or to deactivate the flow heater (5) at a zero of a sinusoidal supply voltage.

13. Method for outputting a hot drink, in particular using a hot drinks machine according to any of claims 9 to 11, comprising the steps of:
selecting (S4) a desired hot drink from a selection of various hot drinks which can be outputted by a drinks output (17) of the hot drinks machine (15), the various hot drinks including at least coffee and tea, on an input device (16) of the hot drinks machine (15);
conveying (S5) hot water from an internal tank (3) of a boiler (2) into a flow heater (5) arranged physically separately therefrom; and
variably actuating (S6) the flow heater (5), by way of a control device (9), so as to regulate a temperature of the hot water (10) flowing out of the flow heater (5) in a manner adapted to a preparation temperature (Tzb) predetermined in accordance with the selected hot drink, this being a predetermined first preparation temperature if tea is being prepared and a predetermined second preparation temperature if coffee is being prepared;
**characterised in that** the control device (9) is configured to activate the flow heater (5) and/or to deactivate the flow heater (5) at a zero of a sinusoidal supply voltage.

## Revendications

1. Système hydraulique (1) pour un distributeur automatique de boissons chaudes (15), comprenant :
un chauffe-eau à accumulation (2) pour fournir de l'eau chaude à partir d'un réservoir interne (3) du chauffe-eau à accumulation (2), une entrée d'eau froide (4) du chauffe-eau étant prévue pour être reliée à un raccordement d'eau ;
au moins un chauffe-eau instantané (5) disposé spatialement séparément du chauffe-eau à accumulation (2), une entrée d'eau chaude (6) du chauffe-eau instantané (5) étant reliée à une sortie d'eau chaude (7) du chauffe-eau à accumulation (2) et une sortie d'eau surchauffée (8) du chauffe-eau instantané (5) étant prévue pour être reliée à un dispositif de distribution de boissons (17) du distributeur automatique de boissons chaudes (15), de l'eau surchauffée (10) sortant du chauffe-eau instantané (5) étant prévue pour la préparation de différentes boissons chaudes pouvant être distribuées par le dispositif de distribution de boissons (17), lesquelles comprennent au moins du thé et du café ; et
un dispositif de commande (9) qui est conçu pour commander de manière variable le chauffe-eau instantané (5) afin de réguler une température de l'eau surchauffée (10) adaptée à une température de préparation (Tzb) respectivement prédéterminée pour la préparation des différentes boissons chaudes, laquelle est une première température de préparation prédéterminée pour la préparation de thé et une deuxième température de préparation prédéterminée pour la préparation de café ;
**caractérisé en ce**
**que** le dispositif de commande (9) est conçu pour activer le chauffe-eau instantané (5) et/ou désactiver le chauffe-eau instantané (5) lors d'un passage par zéro d'une tension d'alimentation sinusoïdale.

2. Système hydraulique selon la revendication 1,
**caractérisé en ce**
**qu'**un débitmètre (11) est prévu pour détecter un débit (V), le débitmètre (11) étant relié au dispositif de commande (9), et le dispositif de commande (9) étant conçu pour commander le chauffe-eau instantané (5) afin de réguler la température de l'eau surchauffée (10) sur la base du débit (V) détecté.

3. Système hydraulique selon la revendication 2,
**caractérisé en ce**
**qu'**un capteur de température d'eau chaude (12) est prévu pour détecter une température d'eau chaude (T2) entre le chauffe-eau à accumulation (2) et le chauffe-eau instantané (5), le capteur de température d'eau chaude (12) étant relié au dispositif de commande (9), et le dispositif de commande (9) étant conçu pour commander le chauffe-eau instantané (5) afin de réguler la température de l'eau surchauffée (10) sur la base de la température d'eau chaude (T2), en particulier sur la base d'une différence entre la température de préparation (Tzb) prédéterminée et la température d'eau chaude (T2) déterminée, et/ou sur la base du débit (V).

4. Système hydraulique selon l'une des revendications précédentes,
**caractérisé en ce**
**que** le chauffe-eau instantané (5) présente au moins un premier étage de chauffe (5a) et un deuxième étage de chauffe (5b), une première puissance électrique absorbée maximale du premier étage de chauffe (5a) étant prévue de préférence inférieure à une deuxième puissance électrique absorbée maximale du deuxième étage de chauffe (5b).

5. Système hydraulique selon la revendication 4,
**caractérisé en ce**
**que** la première puissance électrique maximale absorbée du premier étage de chauffe (5a) se situe dans une plage de 100 W à 1000 W, en particulier de 400 W à 600 W, et que la deuxième puissance électrique maximale absorbée du deuxième étage de chauffe (5b) se situe dans une plage de 1000 W à 2000 W, en particulier de 1200 W à 1400 W, une puissance électrique totale maximale absorbée du chauffe-eau instantané (5) se situant dans une plage de 1500 W à 2500 W, en particulier de 1500 W à 2000 W.

6. Système hydraulique selon la revendication 4 ou 5,
**caractérisé en ce**
**que** le dispositif de commande (9) est conçu pour activer le premier étage de chauffe (5a) du chauffe-eau instantané (5) et/ou le deuxième étage de chauffe (5b) du chauffe-eau instantané (5) lors d'un passage par zéro d'une tension d'alimentation sinusoïdale.

7. Système hydraulique selon l'une des revendications précédentes,
**caractérisé en ce**
**que** le chauffe-eau à accumulation (2) est réalisé sous la forme d'un chauffe-eau à accumulation sous pression, le chauffe-eau à accumulation sous pression et les éléments hydrauliques disposés en aval de celui-ci, en particulier le chauffe-eau instantané (5) et les liaisons entre le chauffe-eau à accumulation sous pression, le chauffe-eau instantané (5) et les vannes de distribution (13a, 13b, 13c), étant conçus pour une pression d'eau comprise entre 2 bars et 20 bars, en particulier entre 8 bars et 12 bars.

8. Système hydraulique selon la revendication 3,
**caractérisé en ce**
**qu'**un capteur de température d'eau surchauffée (14) est prévu en aval du chauffe-eau instantané (5) pour détecter une température d'eau surchauffée (T3), le capteur de température d'eau surchauffée (14) étant relié au dispositif de commande (9), et le dispositif de commande (9) étant conçu comme dispositif de régulation pour commander le chauffe-eau instantané (5) sur la base, en outre, d'une différence entre la température de préparation (Tzb) prédéterminée et la température d'eau surchauffée (T3) déterminée.

9. Distributeur automatique de boissons chaudes (15), comprenant
un dispositif de distribution de boissons (17), et
un système hydraulique (1) selon l'une des revendications précédentes couplé au dispositif de distribution de boissons.

10. Distributeur automatique de boissons chaudes (15) selon la revendication 9,
**caractérisé en ce**
**que** le système hydraulique est couplé au dispositif de distribution de boissons (17) pour la préparation de toutes les différentes boissons chaudes pouvant être distribuées par le dispositif de distribution de boissons (17) avec l'eau surchauffée (10) sortant du chauffe-eau instantané (5) .

11. Distributeur automatique de boissons chaudes (15) selon la revendication 9 ou 10,
**caractérisé en ce**
**qu'**il est prévu un dispositif d'entrée (16) pour la sélection par un utilisateur d'une boisson chaude à distribuer ;
le dispositif de commande (9) étant conçu pour réguler la température de l'eau surchauffée (10) de manière adaptée à une température de préparation optimale respective d'une boisson chaude sélectionnée au moyen du dispositif d'entrée (16), lequel peut être réglé individuellement en particulier pour du thé, du café, un expresso, des boissons instantanées, des boissons au cacao et/ou des boissons mélangées ainsi que des variétés et des goûts correspondants.

12. Procédé de fabrication d'un système hydraulique (1) pour un distributeur automatique de boissons chaudes (15), en particulier d'un système hydraulique selon l'une des revendications 1 à 8, comprenant les étapes consistant à :
fournir (S1) un chauffe-eau à accumulation (2) pour l'alimentation en eau chaude à partir d'un réservoir interne (3) du chauffe-eau à accumulation (2) ;
relier (S2) une sortie d'eau chaude (7) du chauffe-eau à accumulation (2) à une entrée d'eau chaude (6) d'au moins un chauffe-eau instantané (5) disposé spatialement séparément du chauffe-eau à accumulation (2), une sortie d'eau surchauffée (8) du chauffe-eau instantané (5) étant prévue pour être reliée à un dispositif de distribution de boissons (17) du distributeur automatique de boissons chaudes (15), de l'eau surchauffée (10) sortant du chauffe-eau instantané (5) étant prévue pour la préparation de différentes boissons chaudes pouvant être distribuées par le dispositif de distribution de boissons (17), les différentes boissons chaudes comprenant au moins du thé et du café ;
relier (S3) un dispositif de commande (9) au chauffe-eau instantané (5), lequel est conçu pour commander de manière variable le chauffe-eau instantané (5) afin de réguler une température de l'eau surchauffée sortante (10) adaptée à une température de préparation respectivement prédéterminée pour la préparation des différentes boissons chaudes pouvant être distribuées par le dispositif de distribution de boissons (17), laquelle est une première température de préparation prédéterminée pour la préparation de thé et une deuxième température de préparation prédéterminée pour la préparation de café ;
**caractérisé en ce**
**que** le dispositif de commande (9) est conçu pour activer le chauffe-eau instantané (5) et/ou désactiver le chauffe-eau instantané (5) lors d'un passage par zéro d'une tension d'alimentation sinusoïdale.

13. Procédé de distribution d'une boisson chaude, en particulier avec un distributeur automatique de boissons chaudes selon l'une des revendications 9 à 11, comprenant les étapes consistant à :
sélectionner (S4) une boisson chaude souhaitée parmi une sélection de différentes boissons chaudes pouvant être distribuées par un dispositif de distribution de boissons (17) du distributeur automatique de boissons chaudes (15), les différentes boissons chaudes comprenant au moins du café et du thé, sur un dispositif d'entrée (16) du distributeur automatique de boissons chaudes (15) ;
transporter (S5) de l'eau chaude depuis un réservoir interne (3) d'un chauffe-eau à accumulation (2) vers un chauffe-eau instantané (5) spatialement séparé de celuici ; et
commander de manière variable (S6) le chauffe-eau instantané (5) avec un dispositif de commande (9) afin de réguler une température de l'eau surchauffée (10) sortant du chauffe-eau instantané (5) adaptée à une température de préparation (Tzb) prédéterminée selon la boisson chaude choisie, laquelle est une première température de préparation prédéterminée pour la préparation de thé et une deuxième température de préparation prédéterminée pour la préparation de café ;
**caractérisé en ce**
**que** le dispositif de commande (9) est conçu pour activer le chauffe-eau instantané (5) et/ou désactiver le chauffe-eau instantané (5) lors d'un passage par zéro d'une tension d'alimentation sinusoïdale.
